# EUROPEAN PATENT APPLICATION

(11) **EP 3 103 659 A1**
(43) Date of publication of application: **14.12.2016**
(21) Application number: 15742827.7
(22) Date of filing: 13.01.2015
(51) Int. Cl.: B60C 17/00

(54) **RUN-FLAT RADIAL TIRE**

(30) Priority: 03.02.2014 JP 2014018920
(71) Applicant: Bridgestone Corporation, Tokyo 104-8340 (JP)
(72) Inventor: OGAWA, Gaku, Tokyo 104-8340 (JP)
(74) Representative: Oxley, Robin John George
(86) International application number: PCT/JP2015/050643
(87) International publication number: WO 2015/115162

(57) **Abstract**

A run-flat radial tire is provided that has a tire cross-section height of 115 mm or greater includes a carcass spanning between a pair of bead portions, a side reinforcing rubber layer that is provided to a tire side portion and that extends in a tire radial direction along an inner face of the carcass, and at least one inclined belt layer that is provided at a tire radial direction outside of the carcass and includes cord extending in a direction inclined with respect to a tire circumferential direction. At least at one end portion side in the tire axial direction of a maximum width inclined belt layer having the largest width in the tire axial direction, the maximum width inclined belt layer and the side reinforcing rubber layer have an overlap width in the tire axial direction of 22.5% or greater of the tire cross-section height.

## Description

### Technical Field

This application claims priority from Japanese Patent Application No. 2014-018920, filed February 3, 2014, the disclosure of which is incorporated in its entirety by reference herein.

The present invention relates to a run-flat radial tire.

### Background Art

As a run-flat radial tire capable of running safely for a specific distance even in a state in which the internal pressure has dropped due to puncturing or the like, a side reinforcement type run-flat radial tire is known in which tire side portions are reinforced with side reinforcing rubber layers (see, for example, Japanese Patent Application Laid-Open (JP-A) No. 2009-126262).

### SUMMARY OF INVENTION

### Technical Problem

Side reinforcement type run-flat radial tires have focused on tires having a size with a comparatively small tire cross-section height. This is since when a slip angle is applied during run-flat running (when running in a state of reduced internal pressure due to puncturing or the like), a tire deformation amount increases with increasing tire cross-section height, making it difficult to achieve the levels of performance required of a run-flat radial tire.

In particular, rim detachment at a vehicle turn inside is liable to occur in side reinforcement type run-flat radial tires with a high tire cross-section height.

It is conceivable that this rim detachment at the vehicle turn inside could be caused by buckling (a phenomenon in which the tire side portion bends by folding in toward the tire inside) occurring in the tire side portion at the vehicle turn inside. The present inventors have arrived at the present invention based on this knowledge.

The present invention provides a side reinforcement type run-flat radial tire with greatly improved rim detachment performance (much better rim detachment prevention). Solution to Problem

One aspect is a run-flat radial tire having a tire cross-section height of 115 mm or greater that includes a carcass spanning between a pair of bead portions, a side reinforcing rubber layer that is provided to a tire side portion and that extends in a tire radial direction along an inner face of the carcass, and at least one inclined belt layer that is provided at a tire radial direction outside of the carcass and that includes cord extending in a direction inclined with respect to a tire circumferential direction. At at least one end portion side in a tire axial direction of a maximum width inclined belt layer having the largest width in the tire axial direction, the maximum width inclined belt layer and the side reinforcing rubber layer have an overlap width in the tire axial direction of 22.5% or greater of the tire cross-section height.

The present inventors have confirmed that, when the tire cross-section height is 115 mm or greater in side reinforcement type run-flat radial tires, heavy bending even occurs from a width direction end portion to an equatorial plane side portion of a tread (also referred to below as "the vicinity of the tread end portion") accompanying buckling of the tire side portion as a result of being applied with a slip angle. Accordingly, in the run-flat radial tire of the present aspect, in the vicinity of the tread end portion, this being a region where heavy bending, which is a cause of buckling, occurs, the overlap width in the tire axial direction between the maximum width inclined belt layer and the side reinforcing rubber layer is 22.5% or greater of the tire cross-section height, thereby sufficiently increasing the rigidity of this region, suppressing buckling of the tire side portion, and improving rim detachment performance.

In the run-flat radial tire of the above aspect, configuration may be made wherein a thickness of the side reinforcing rubber layer as measured along a normal line to the carcass passing through a tire axial direction end portion of the maximum width inclined belt layer is 70% or greater of a thickness of the side reinforcing rubber layer at a maximum width position of the carcass.

In the above configuration, the thickness of the side reinforcing rubber layer at the end portion of the maximum width inclined belt layer, this being a portion that is liable to bend during buckling, is 70% or greater than that of the side reinforcing rubber layer at the maximum width position of the carcass. This thereby enables the bending rigidity of the run-flat radial tire to be increased, and enables rim detachment performance to be improved.

In the run-flat radial tire of the above aspect, configuration may be made wherein a thickness of the side reinforcing rubber layer as measured along a normal line to the carcass passing through a position at 14% of the tire cross-section height to the tire axial direction inside of a tire axial direction end portion of the maximum width inclined belt layer is 30% or greater of a thickness of the side reinforcing rubber layer at a maximum width position of the carcass.

In the above configuration, the thickness of the side reinforcing rubber layer at the position located 14% of the tire cross-section height to the tire axial direction inside of the end portion of the maximum width inclined belt layer, this being a portion that is liable to bend during buckling, is 30% or greater of the thickness of the side reinforcing rubber layer at the maximum width position of the carcass. This thereby enables the bending rigidity of the run-flat radial tire to be increased, and enables rim detachment performance to be improved.

In the run-flat radial tire of the above aspect, configuration may be made wherein a tire axial direction width of the maximum width inclined belt layer is 80% or greater of a tire cross-section width.

In the above configuration, the tire axial direction width of the maximum width inclined belt layer is 80% or greater of the tire cross-section width. This thereby enables the occurrence of buckling of the tire side portion to be suppressed, and enables rim detachment performance to be improved.

### Effects of Invention

The run-flat radial tire of the present aspect enables rim detachment performance to be improved (much better rim detachment prevention).

### BRIEF DESCRIPTION OF DRAWINGS

Fig. 1 is a tire half cross-section sectioned along the tire axial direction, illustrating one side of a cross-section of a run-flat radial tire according to an exemplary embodiment.
Fig. 2 is a tire cross-section sectioned along the tire axial direction, illustrating the run-flat radial tire in Fig. 1 in a state in which a tire side portion has buckled.
Fig. 3 is a tire half cross-section sectioned along the tire axial direction, illustrating one side of a cross-section of a run-flat radial tire according to an exemplary embodiment.
Fig. 4 is an explanatory diagram to explain a mechanism by which rim detachment occurs at a turn inside of a vehicle according to a comparative example.
Fig. 5 is a graph illustrating a relationship between tire cross-section height and rim detachment performance in run-flat radial tires.

### DESCRIPTION OF EMBODIMENTS

Explanation follows regarding exemplary embodiments, based on the drawings.

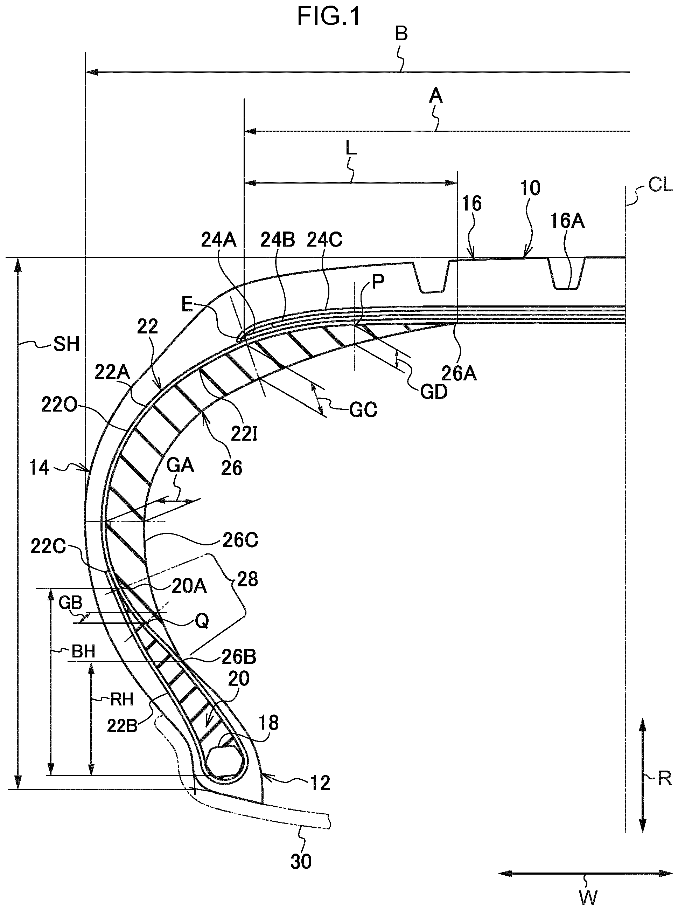

Fig. 1 illustrates one side of a run-flat radial tire (referred to below simply as a "tire") 10 according to an exemplary embodiment, in cross-section sectioned along a tire axial direction. The arrow W in Fig. 1 indicates the axial direction of the tire 10 (referred to below as the "tire axial direction" as appropriate), the arrow R indicates a radial direction of the tire 10 (referred to below as the "tire radial direction" as appropriate), and the label CL indicate an equatorial plane of the tire 10 (referred to below as the "tire equatorial plane" as appropriate). In the present exemplary embodiment, the side of the axis (axis of rotation) of the tire 10 in the tire radial direction is referred to as the "tire radial direction inside", and the opposite side to the side of the axis of the tire 10 in the tire radial direction is referred to as the "tire radial direction outside". The equatorial plane CL side of the tire 10 in the tire axial direction is referred to as the "tire axial direction inside", and the opposite side to the equatorial plane CL side of the tire 10 in the tire axial direction is referred to as the "tire axial direction outside".

Fig. 1 illustrates the tire 10 mounted to a standard rim 30 (illustrated by double-dotted intermittent lines in Fig. 1) when inflated to a standard air pressure. The standard rim referred to here is a rim specified in the 2013 edition of the Year Book of the Japan Automobile Tire Manufacturers Association (JATMA). The above standard air pressure is the air pressure corresponding to the maximum load capacity in the 2013 edition of the Year Book of the Japan Automobile Tire Manufacturers Association (JATMA).

Note that outside of Japan, loading is to the maximum load (maximum load capacity) for a single wheel of the appropriate size as listed in the following Standards. The internal pressure is the air pressure corresponding the maximum load (maximum load capacity) for a single wheel listed in the following Standards. Moreover, the rim is a standard rim (or "Approved Rim", "Recommended Rim") of the appropriate size as listed in the following Standards. The Standard is determined according to the Industrial Standards prevailing in the region of tire manufacture or use, for example, as stipulated in "The Year Book of the Tire and Rim Association Inc." in the United States of America, in the "Standards Manual of the European Tyre and Rim Technical Organisation" in Europe, and in the "JATMA Year Book" of the Japan Automobile Tire Manufacturers Association in Japan.

Note that the tire 10 of the present exemplary embodiment may be any tire with a tire cross-section height of 115 mm or greater, for example, 129 mm.

As illustrated in Fig. 1, the run-flat radial tire 10 according to the present exemplary embodiment includes a pair of bead portions 12 (Fig. 1 only illustrates the bead portion 12 on one side), a pair of tire side portions 14 respectively extending from the pair of bead portions 12 toward the tire radial direction outside, and a tread portion 16 extending from one tire side portion 14 to the other tire side portion 14. The tire side portions 14 bear load applied to the tire 10 during run-flat running.

Respective bead cores 18 are embedded in the pair of bead portions 12. A carcass 22 spans between the pair of bead cores 18. End portion sides of the carcass 22 are anchored to the bead cores 18. Note that the end portion sides of the carcass 22 are folded back around the bead cores 18 from the tire inside toward the tire outside, and anchored thereto. End portions 22C of folded-back portions 22B contact a carcass main portion 22A. The carcass 22 extends from one bead core 18 to the other bead core 18 in a toroidal shape, and configures a tire frame.

At the tire radial direction outside of the carcass main portion 22A, belt layers 24A, 24B are stacked from the tire radial direction inside. A cap layer 24C is stacked over the belt layers 24A, 24B. The respective belt layers 24A, 24B each have a general configuration in which plural steel cords are laid parallel to each other and coated with rubber, and the steel cords of the belt layer 24A and the steel cords of the second belt layer 24B are disposed inclined in opposite directions with respect to the equatorial plane CL so as to intersect each other. Note that in the present exemplary embodiment, out of the belt layers 24A, 24B, the belt layer 24A that has the greater width in the tire axial direction corresponds to a maximum width inclined belt layer.

The width of the maximum width inclined belt layer (belt layer 24A) in the tire width direction is preferably from 90% to 115% of a tread width. Here, the "tread width" means the tire axial direction width of a ground contact region under maximum load capacity in a state in which the tire 10 is fitted to the standard rim 30 with an internal pressure of the standard air pressure. The "maximum load capacity" referred to here indicates the maximum load capacity as listed in the 2013 edition of the Year Book by the Japan Automobile Tire Manufacturers Association (JATMA).

Bead filler 20 that extends from the respective bead cores 18 toward the tire radial direction outside along an outer face 220 of the carcass 22 is embedded inside each bead portion 12. The bead filler 20 is disposed in a region surrounded by the carcass main portion 22A and the folded-back portion 22B. The bead filler 20 decreases in thickness on progression toward the tire radial direction outside, and an end portion 20A at the tire radial direction outside of the bead filler 20 enters into the tire side portion 14.

As illustrated in Fig. 1, a height BH of the bead filler 20 is preferably from 30% to 50% of a tire cross-section height SH, and is set to 42% thereof in the present exemplary embodiment.

Note that the "tire cross-section height" referred to here means a length of 1/2 the difference between the tire external diameter and the rim diameter in a non-loaded state, as defined in the Year Book by the Japan Automobile Tire Manufacturers Association (JATMA). The "bead filler height BH" means a length measured along the tire radial direction from a lower end (tire radial direction inside end portion) of the bead core 18 to the end portion 20A of the bead filler 20 in a state in which the tire 10 is fitted to the standard rim 30 and the internal pressure is the standard air pressure.

In the tire side portions 14, side reinforcing rubber layers 26 reinforcing the respective tire side portions 14 are arranged at the tire axial direction inside of the carcass 22. The side reinforcing rubber layers 26 extend along an inner face 22I of the carcass 22 in the tire radial direction. Each side reinforcing rubber layer 26 has a shape such as a substantially crescent moon shape, with decreasing thickness on progression toward the bead core 18 side and on progression toward the tread portion 16 side. Note that the "thickness of the side reinforcing rubber layer" referred to here means a length measured along a normal line to the carcass 22 in a state in which the tire 10 is fitted to the standard rim 30 and the internal pressure is the standard air pressure.

Each side reinforcing rubber layer 26 is formed such that an end portion 26A on the tread portion 16 side overlaps with the belt layer 24A with the carcass 22 (carcass main portion 22A) interposed therebetween, and an end portion 26B on the bead core 18 side overlaps with the bead filler 20 with the carcass 22 interposed therebetween.

As viewed along the tire radial direction, an overlap width L in the tire axial direction between the side reinforcing rubber layer 26 and the belt layer 24A is set to 22.5% or greater of the tire cross-section height SH.

As illustrated in Fig. 1, a thickness GB of the side reinforcing rubber layer 26 at a center point Q between the end portion 20A of the bead filler 20 and the end portion 26B of the side reinforcing rubber layer 26 in the extension direction of the carcass 22 is preferably 50% or less of a thickness GA (also referred to below as the "maximum thickness GA") of the side reinforcing rubber layer 26 at a maximum width position of the carcass 22. In the present exemplary embodiment, it is set to 30% thereof.

The "maximum width position of the carcass" referred to here means the position where the carcass 22 reaches furthest to the tire axial direction outside.

A thickness GC of the side reinforcing rubber layer 26 at a tire axial direction end portion E of the belt layer 24A, this being the maximum width inclined belt layer, is set to 70% or greater of the maximum thickness GA.

A thickness GD of the side reinforcing rubber layer 26 at a position P located 14% of the tire cross-section height SH to the tire axial direction inside of the tire axial direction end portion E of the belt layer 24A is preferably 30% or greater of the maximum thickness GA.

A tire radial direction distance RH between the lower end (tire radial direction inside end portion) of the bead core 18 and the end portion 26B of the side reinforcing rubber layer 26 is preferably between 50% and 80% of the bead filler height BH In the present exemplary embodiment, it is 65% thereof.

The "tire radial direction distance RH" means a length measured along the tire radial direction from the lower end (tire radial direction inside end portion) of the bead core 18 to the end portion 26B of the side reinforcing rubber layer 26 in a state in which the tire 10 is fitted to the standard rim 30 and the internal pressure is the standard air pressure.

The side reinforcing rubber layer 26 is reinforcing rubber to enable running for a specific distance in a state in which the weight of the vehicle and its occupant(s) is supported when the internal pressure of the tire 10 has decreased, such as due to puncturing.

The tread portion 16 is formed with plural circumferential direction grooves 16A extending around the tire circumferential direction. At an inner face of the tire 10, an inner liner, not illustrated in the drawings, with a main component of butyl rubber is arranged spanning from one bead portion 12 to the other bead portion 12. Note that the main component of the inner liner may be a resin.

There is no rim guard provided in the present exemplary embodiment since the tire 10 has a high tire cross-section height that is a tire cross-section height of 115 mm or greater; however, a rim guard may be provided.

Next, explanation follows regarding operations of the tire 10 of the present exemplary embodiment.

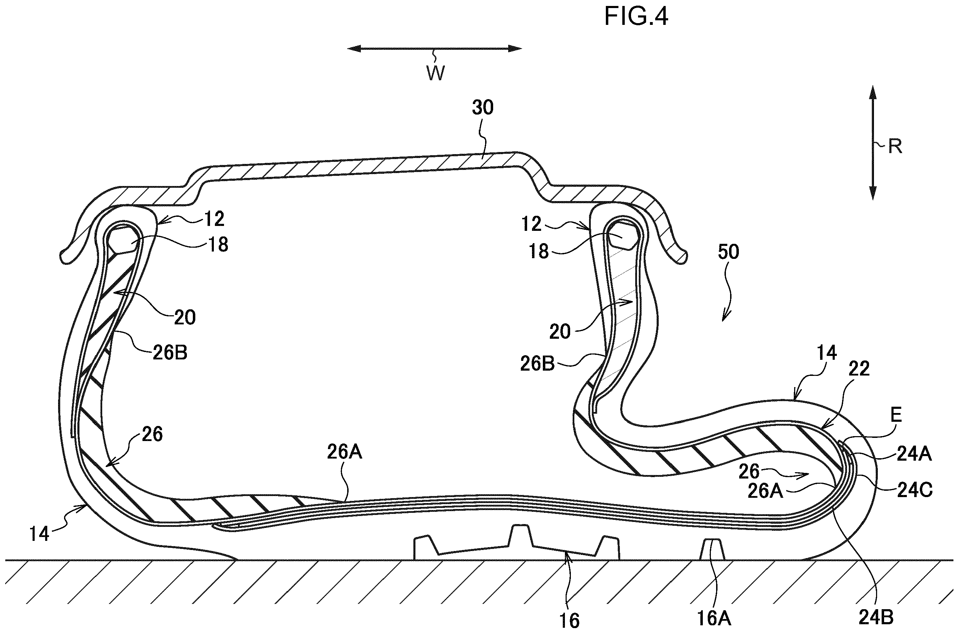

First, simple explanation follows regarding a mechanism of rim detachment in the tire 10. This explanation employs a tire 50 (see Fig. 4) as a comparative example in which the tire axial direction overlap width L between each side reinforcing rubber layer 26 and the belt layer 24A, this being the maximum width inclined belt layer, is 14% (less than 22.5%) of the tire cross-section height SH, but that is configured similarly to the tire 10 in other respects. Configuration elements that are effectively the same as in the tire 10 are allocated the same reference numerals.

As illustrated in Fig. 4, during run-flat running, if a slip angle is applied to the tire 50, for example due to turning, a ground contact portion of the tire 50 is squashed, distortion of the tire 50 increases, and a belt diameter of a tread-in portion of the tire 50 becomes larger. As a result, tensile force toward the tire radial direction outside acting on the bead portion 12 positioned at the turn inside becomes larger at a tread-in position, and, together with buckling occurring at the tread-in position of the tire side portion 14 positioned at the vehicle turn inside, the bead portion 12 may detach from the standard rim 30 (rim detachment).

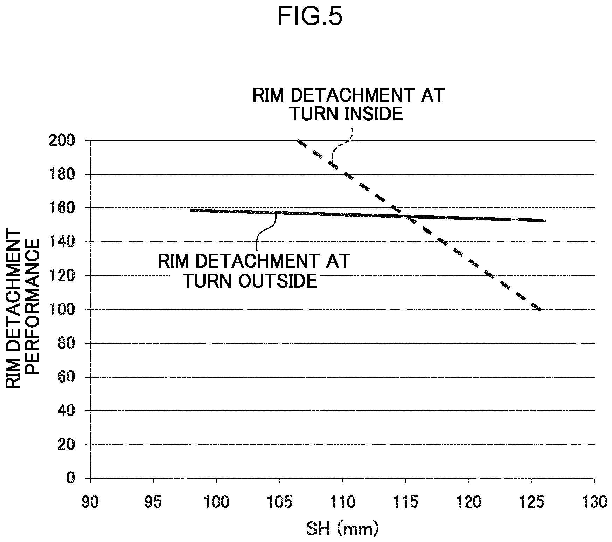

As illustrated in Fig. 5, it has been confirmed that rim detachment at the vehicle turn inside is liable to occur in tires having a tire cross-section height SH of 115 mm or greater. The graph illustrated in Fig. 5 is from an investigation into a rim detachment index against tire cross-section height SH, employing run-flat radial tires with a tire width of 215 while varying the tire cross-section height SH. The higher the numerical value in the rim detachment index, the less liable rim detachment is to occur. According to Fig. 5, rim detachment is more liable to occur at the turn outside of the tire for tires with a tire cross-section height SH of less than 115 mm, and it is apparent that it is important to suppress rim detachment at the turn inside for tires with a tire cross-section height SH of 115 mm or greater. The tire cross-section height is specifically 250 mm or lower, and in particular 155 mm or lower.

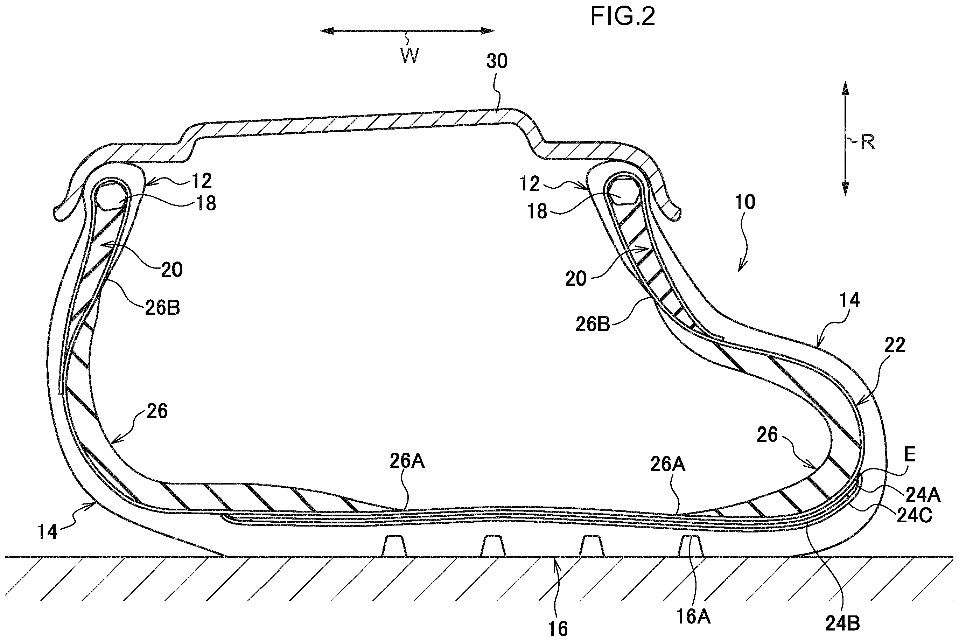

However, in the tire 10 according to the present exemplary embodiment, the overlap width L in the tire axial direction between each side reinforcing rubber layer 26 and the belt layer 24A is 22.5% or greater of the tire cross-section height (see Fig. 1). Accordingly, even when a slip angle is applied during run-flat running, since the rigidity is increased at the position P located 14% of the tire cross-section height SH to the tire axial direction inside of the tire axial direction end portion E of the load-supporting belt layer 24A, bending of the belt layer 24A is suppressed in the vicinity of the position P (see Fig. 2). The occurrence of buckling in the tire side portion 14 is accordingly suppressed, enabling rim detachment performance to be improved.

In particular, a tire such as the tire 10 of the present exemplary embodiment, in which the height (length along the tire radial direction) of the tire side portions 14 is high, for example a tire with a tire cross-section height of 115 mm or greater, is liable to buckle at the tire side portions 14. Accordingly, in the tire 10 having a tire cross-section height of 115 mm or greater, setting the tire axial direction overlap width L between the side reinforcing rubber layer 26 and the belt layer 24A to 22.5% or greater of the tire cross-section height enables buckling of the tire side portions 14 to be effectively suppressed.

If a tire axial direction width A of the maximum width inclined belt layer (belt layer 24A) is 80% or greater of a tire cross-section width B, rigidity can be increased and bending can be suppressed across a wider range of the tread portion 16, enabling buckling of the tire side portions 14 to be suppressed, and enabling rim detachment performance to be improved.

In such cases, enlarging the overlap width L between the side reinforcing rubber layer 26 and the belt layer 24A toward the tire width direction outside enables buckling of the side portions to be further suppressed.

For example, if the thickness GD of the side reinforcing rubber layer 26 at the position P located 14% of the tire cross-section height SH to the tire axial direction inside of the tire axial direction end portion E of the belt layer 24A is 30% or greater of the maximum thickness GA, the occurrence of buckling can be further suppressed, and rim detachment performance can be further improved.

In the tire 10, since the thickness GC of the side reinforcing rubber layer 26 at the tire axial direction end portion E of the belt layer 24A, this being the maximum width inclined belt layer, is set at 70% or greater of the maximum thickness GA, the bending rigidity of the belt layer 24A in the vicinity of the tire axial direction end portion E can be further improved, and rim detachment performance can be further improved.

In the tire 10, since the end portions 26B of the side reinforcing rubber layers 26 overlap with the bead filler 20 with the carcass 22 interposed therebetween, the rigidity of the tire side portions 14 is increased, improving run-flat durability.

Moreover, in the tire 10, since the height BH of the bead filler 20 set to 42% (from 30% to 50%) of the tire cross-section height SH, both ride quality and run-flat durability can be achieved. Namely, if the height BH of the bead filler 20 is less than 30% of the tire cross-section height SH, the bead portions 12 have low rigidity and are liable to deform, making tire damage and the like more likely to occur, and reducing run-flat durability. On the other hand, if the height BH of the bead filler 20 exceeds 50% of the tire cross-section height SH, the rigidity of the bead portions 12 becomes too high, reducing the ride quality.

Moreover, in the tire 10, since the thickness of the side reinforcing rubber layers 26 decreases on progression toward the bead core 18 side and on progression toward the tread portion 16 side, and the thickness GB of the side reinforcing rubber layer 26 at the center point Q of an overlapping portion 28 is 30% (50% or lower) of the maximum thickness GA of the side reinforcing rubber layer 26 at the maximum width position of the carcass 22, damage to the side reinforcing rubber layer 26 is suppressed even when side buckling has occurred. This is since there is a short distance from the carcass 22 to an inner face 26C of the side reinforcing rubber layer 26 at the center point Q of the overlapping portion 28, thereby reducing tensile stress acting on the inner face 26C (specifically, a portion of the inner face 26C corresponding to the overlapping portion 28).

Moreover, in the tire 10, since the tire radial direction distance RH between the lower end (tire radial direction inside end portion) of each bead core 18 and the end portion 26B of the side reinforcing rubber layer 26 is set to 65% (from 50% to 80%) of the bead filler height BH, both ride quality and run-flat durability can be achieved. Namely, if the tire radial direction distance RH is less than 50% of the height BH, the rigidity of the bead portions 12 becomes too high, reducing the ride quality. On the other hand, if the tire radial direction distance RH exceeds 80% of the height BH, the reduction in the rigidity of the bead portions 12 reduces the run-flat durability.

In the present exemplary embodiment, configuration is made in which the end portion sides of the carcass 22 are folded back around the bead cores 18 from the tire axial direction inside toward the tire axial direction outside, and the end portions of the carcass 22 are anchored to the bead cores 18. However, the present exemplary embodiment is not limited to this configuration, and, for example, configuration may be made in which each bead core 18 is divided into halves, and the end portion sides of the carcass 22 are sandwiched between the bead core 18 halves to anchor the end portions of the carcass 22 to the bead cores 18.

In the present exemplary embodiment, configuration is made in which the side reinforcing rubber layers 26 are configured from a single type of rubber. However, the side reinforcing rubber layers 26 may also contain fillers, short fibers, resins, or the like, as long as rubber is the main component.

The side reinforcing rubber layers 26 may be configured from plural types of rubber. For example, the side reinforcing rubber layers 26 may be configured by layering plural different types of rubber in the tire radial direction or in the tire axial direction. In cases in which the side reinforcing rubber layers 26 are configured by layering plural different types of rubber in the tire radial direction, advantageous effects can be obtained as long as the tire axial direction overlap width L between either one of the side reinforcing rubber layers 26 and the belt layer 24A, this being the maximum width inclined belt layer, is 22.5% or greater of the tire cross-section height SH.

Note that the side reinforcing rubber layers 26 of the present exemplary embodiment may employ another material instead of rubber. For example, a thermoplastic resin may conceivably be employed.

Moreover, in cases in which the carcass 22 has plural layers, side reinforcing rubber layers 26 may be provided at plural locations between the layers of the carcass 22, and between the carcass 22 and an inner liner.

### Other Exemplary Embodiments

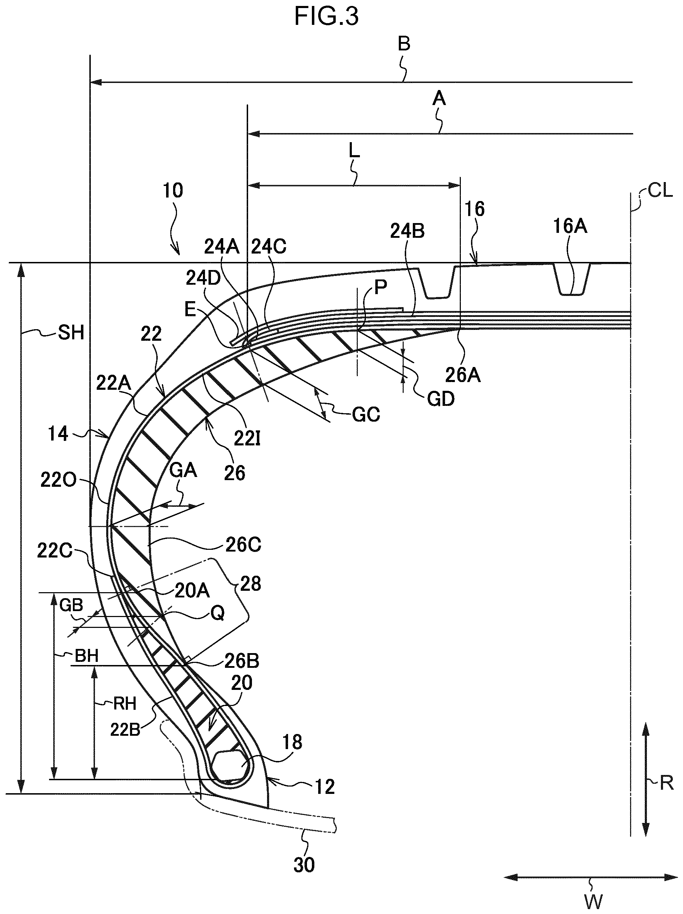

As illustrated in Fig. 3, at the tire radial direction outside of the carcass 22, a reinforcing cord layer 24D configured by a layer of rubber-coated cord may be provided so as to cover only upper portions and shoulder portions (tire axial direction end portions) of the belt layers 24A, 24B and the cap layer 24C, or may be provided so as to cover the belt layers 24A, 24B and the cap layer 24C in their entirety. The cord configuring the reinforcing cord layer 24D is preferably inclined in a range of from 60° to 90° with respect to the tire circumferential direction. Adding such a reinforcing cord layer 24D increases the bending rigidity in the vicinity of the position P located 14% of tire cross-section height SH to the tire axial direction inside of the tire axial direction end portion E of the belt layer 24A and the like, thereby enabling buckling of the tire side portions 14 to be further suppressed.

Note that providing plural reinforcing cord layers enhances the above advantageous effect. However, since this increases the weight of the tire, a single reinforcing cord layer is employed in the present exemplary embodiment.

Although rubber members of the tire side portions 14 at the tire axial direction outsides of the carcass 22 are not specified in the present exemplary embodiment, they may, for example, include rubber having the physical properties of a JIS hardness (at 20°C) of from 70 to 85, and a loss coefficient tan δ (at 60°C) of 0.10 or lower.

Explanation has been given regarding exemplary embodiments; however, the present disclosure is not limited to such exemplary embodiments, and obviously various configurations may be implemented within a range not departing from the spirit of the present disclosure.

### Test Examples

In order to confirm the effects of the present disclosure, twelve variations (Examples 1 to 12 below) of a run-flat radial tire (referred to below simply as "tire") according to an exemplary embodiment, and one variation of a run-flat radial tire of comparative examples (the Comparative Examples below) were prepared, and the following tests were performed.

Explanation follows regarding the run-flat radial tires of Examples 1 to 12, and the run-flat radial tires of Comparative Examples 1 and 2 employed in testing. Each of the run-flat radial tires employed in testing has a size of 215/60R17 and a tire cross-section height of 129 mm.

A similar structure to the structure of the tire 10 of the exemplary embodiment described above was employed for each of the run-flat radial tires of Examples 1 to 12. The run-flat radial tires of Examples 1 to 5 are tires in which the respective values of the "overlap width L between the maximum width inclined belt and the side reinforcing rubber layer" and the "thickness GD of the side reinforcing rubber layer at the position P located 14% of the tire cross-section height SH to the tire axial direction inside of the end portion of the maximum width inclined belt " vary.

The run-flat radial tires of Examples 6 to 10 are tires in which the respective values of the "thickness GC of the side reinforcing rubber layer at the end portion of the maximum inclined belt" and the "thickness GD of the side reinforcing rubber layer at the position P located 14% of the tire cross-section height SH to the tire axial direction inside of the end portion of the maximum width inclined belt " vary.

The run-flat tires of Examples 11 and 12 are tires in which the respective values of the "tire axial direction width A between the end portions of the maximum inclined belt layer" vary.

The run-flat radial tire of Comparative Example 1 is a tire with a similar structure to that of the run-flat radial tires of Examples 1 to 10; however, the value of the overlap width L between the maximum width inclined belt and the side reinforcing rubber layer is not within the range of the present disclosure. The respective values of Examples 1 to 10 and the Comparative Example are as shown in Table 1 and Table 2.

The run-flat radial tire of Comparative Example 2 is a tire with a similar structure to that of the run-flat radial tires of Examples 11 and 12; however, the value of the tire axial direction width A of the maximum width inclined belt layer is not within the range of the present disclosure. The respective values of Examples 11 and 12 and Comparative Example 2 are as shown in Table 3.

During testing, first the test tires were fitted to a standard rim as specified by JATMA, mounted to a vehicle without inflating with air (at an internal pressure of 0 kPa), and run-in for a distance of 5 km at a speed of 20 km/h. Then, the test tires were introduced at a specific speed to a curving road having a radius of curvature of 25 m, and stopped at a position of 1/3 of a lap of the curving road, with this repeated twice in succession (a J-turn test). The J-turn test was then performed with the speed of introduction raised by 2 km/h, and the turning acceleration when the bead portions detached from the rim (rim hump) was measured.

The turning acceleration when a bead portion of the Comparative Example detached from the rim was taken as a reference value (100), and the turning accelerations when each of the bead portions of Examples 1 to 12 detached from the rim were evaluated and expressed as an index. The "rim detachment performance" in Table 1 to Table 3 expresses as an index the turning acceleration when rim detachment occurred for each bead portion. The higher the numerical value of the rim detachment performance, the better the result indicated.

**Table 1**

| | | Comparative Example 1 | Example 1 | Example 2 | Example 3 | Example 4 | Example 5 |
|---|---|---|---|---|---|---|---|
| Tread width | [mm] | 170 | 170 | 170 | 170 | 170 | 170 |
| Maximum width inclined belt layer | Width (A)[mm] | 160 | 160 | 160 | 160 | 160 | 160 |
| | Overlap width with side reinforcing rubber layer (L) [mm] | 18 | 39 | 45 | 52 | 58 | 65 |
| | L/A | 11% | 24% | 28% | 33% | 36% | 41% |
| | L/tire cross-section height (SH) | 14% | 30% | 35% | 40% | 45% | 50% |
| Side reinforcing rubber layer | Linked at equatorial plane? | No | No | No | No | No | No |
| | Thickness at position of maximum carcass width (GA) | 9 | 9 | 9 | 9 | 9 | 9 |
| | Thickness at maximum | 4 | 6.5 | 6.5 | 6.5 | 6.5 | 6.5 |
| | width inclined belt layer end portion (GC) | | | | | | |
| | Thickness at position 14% of tire cross-section height SH to inside of maximum width inclined belt layer end portion (GD) | 0 | 4 | 4.5 | 4.7 | 4.9 | 5.1 |
| | GC/GA | 44% | 72% | 72% | 72% | 72% | 72% |
| | GD/GA | 0% | 44% | 50% | 53% | 55% | 57% |
| Result | Rim detachment performance | 100 | 125 | 130 | 132 | 134 | 136 |

In Examples 1 to 5, an improvement in rim detachment performance was confirmed due to the tire axial direction overlap width L between the side reinforcing rubber layer and the maximum width inclined belt layer being 22.5% or greater of the tire cross-section height SH.

**Table 2**

| | | Comparative Example 1 | Example 6 | Example 7 | Example 8 | Example 9 | Example 10 |
|---|---|---|---|---|---|---|---|
| Tread width | [mm] | 170 | 170 | 170 | 170 | 170 | 170 |
| Maximum width inclined belt layer | Width (A)[mm] | 160 | 160 | 160 | 160 | 160 | 160 |
| | Overlap width with side reinforcing rubber layer (L) [mm] | 18 | 52 | 52 | 52 | 52 | 52 |
| | L/A | 11% | 32% | 32% | 32% | 32% | 32% |
| | L/tire cross-section height (SH) | 14% | 40% | 40% | 40% | 40% | 40% |
| Side reinforcing rubber layer | Linked at equatorial plane? | No | No | No | No | No | No |
| | Thickness at position of maximum carcass width (GA) | 9 | 9 | 9 | 9 | 9 | 9 |
| | Thickness at maximum width inclined belt layer end portion (GC) | 4 | 5 | 5.6 | 6 | 6.5 | 6.9 |
| | Thickness at position 14% of tire cross-section height SH to inside of maximum width inclined belt layer end portion (GD) | 0 | 2.7 | 4 | 4.4 | 4.7 | 5 |
| | GC/GA | 44% | 56% | 62% | 67% | 72% | 77% |
| | GD/GA | 0% | 30% | 45% | 49% | 52% | 56% |
| Result | Rim detachment performance | 100 | 115 | 122 | 128 | 132 | 134 |

As shown in Table 2, in Examples 6 to 10, in the run-flat radial tires in which the overlap width L between the side reinforcing rubber layer and the maximum width inclined belt layer is 40% (22.5% or greater) of the tire cross-section height SH, an improvement in rim detachment performance was confirmed with an increasing ratio (GD/GA) of the thickness GD of the side reinforcing rubber layer 26 at the position P located 14% of the tire cross-section height SH to the tire axial direction inside of the tire axial direction end portion of the belt layer 24A, this being the maximum width inclined belt layer, with respect to the thickness GA of the side reinforcing rubber layer 26 at the maximum width position of the carcass. A GD/GA of 30% or greater was confirmed as being particularly advantageous.

Moreover, a further improvement in rim detachment performance was confirmed with an increasing ratio (GC/GA) of the thickness GC of the side reinforcing rubber layer 26 at the tire axial direction end portion of the belt layer 24A, this being the maximum width inclined belt layer, with respect to the thickness GA of the side reinforcing rubber layer 26 at the maximum width position of the carcass. A GC/GA of 70% or greater was confirmed as being particularly advantageous.

**Table 3**

| | | Comparative Example 1 | Comparative Example 2 | Example 11 | Example 12 |
|---|---|---|---|---|---|
| Tire cross-section width | (B)[mm] | 215 | 215 | 215 | 215 |
| Tread width | [mm] | 170 | 170 | 170 | 170 |
| Maximum width inclined belt layer | Width (A)[mm] | 160 | 160 | 172 | 183 |
| | Overlap width with side reinforcing rubber layer (L) [mm] | 18 | 39 | 39 | 39 |
| | L/A | 11% | 24% | 23% | 21% |
| | L/tire cross-section height (SH) | 14% | 30% | 30% | 30% |
| | A/B | 74% | 74% | 80% | 85% |
| Side reinforcing rubber layer | Linked at equatorial plane? | No | No | No | No |
| | Thickness at position of maximum carcass width (GA) | 9 | 9 | 9 | 9 |
| | Thickness at maximum width inclined belt layer end portion (GC) | 4 | 6.5 | 6.5 | 6.5 |
| | Thickness at position 14% of tire cross-section height SH to inside of maximum width inclined belt layer end portion (GD) | 0 | 4 | 4 | 4 |
| | GC/GA | 44% | 72% | 72% | 72% |
| | GD/GA | 0% | 44% | 44% | 44% |
| Result | Rim detachment performance | 100 | 125 | 130 | 135 |

As shown in Table 3, in Examples 11 and 12, a further improvement in rim detachment performance was confirmed when the tire axial direction width A of the belt layer 24A, this being the maximum width inclined belt layer, was 80% or greater of the tire cross-section width B.

## Claims

1. A run-flat radial tire having a tire cross-section height of 115 mm or greater, comprising:
a carcass spanning between a pair of bead portions;
a side reinforcing rubber layer that is provided to a tire side portion and that extends in a tire radial direction along an inner face of the carcass; and
at least one inclined belt layer that is provided at a tire radial direction outside of the carcass, and that comprises cord extending in a direction inclined with respect to a tire circumferential direction, wherein, at at least one end portion side in a tire axial direction of a maximum width inclined belt layer having a largest width in the tire axial direction, the maximum width inclined belt layer and the side reinforcing rubber layer have an overlap width in the tire axial direction of 22.5% or greater of the tire cross-section height.

2. The run-flat radial tire of claim 1, wherein a thickness of the side reinforcing rubber layer as measured along a normal line to the carcass passing through a tire axial direction end portion of the maximum width inclined belt layer is 70% or greater of a thickness of the side reinforcing rubber layer at a maximum width position of the carcass.

3. The run-flat radial tire of either claim 1 or claim 2, wherein a thickness of the side reinforcing rubber layer as measured along a normal line to the carcass passing through a position at 14% of the tire cross-section height to the tire axial direction inside of a tire axial direction end portion of the maximum width inclined belt layer is 30% or greater of a thickness of the side reinforcing rubber layer at a maximum width position of the carcass.

4. The run-flat radial tire of any one of claim 1 to claim 3, wherein a tire axial direction width of the maximum width inclined belt layer is 80% or greater of a tire cross-section width.
